# EUROPÄISCHE PATENTANMELDUNG

(11) **EP 1 279 951 A2**
(43) Veröffentlichungstag der Anmeldung: **29.01.2003**
(21) Anmeldenummer: 02102019.3
(22) Anmeldetag: 10.07.2002
(51) Int. Cl.: G01N 27/38

(54) **Vorrichtung zur Behandlung einer Messsonde sowie deren Verwendungen**

(30) Priorität: 24.07.2001 DE 10135237
(71) Anmelder: Mettler-Toledo GmbH, 8606 Greifensee (CH)
(72) Erfinder: Laragne, Jean, 6312, Steinhausen (CH); Rüegg, Matthias, 9230, Flawil (CH); Caderas, Daniel, 8235, Lohn (CH)
(74) Vertreter: Ulrich, Jürg

(57) **Zusammenfassung**

Die Vorrichtung zur Behandlung einer Messsonde weist eine Behandlungskammer (104) mit einem Mediumeinlass (106) und einem Mediumauslass (108) auf. Eine Fördervorrichtung (110) ist vorgesehen, um wahlweise ein aus einer Mehrzahl von Behandlungsmedien (G, W, R, E, Z) ausgewähltes Behandlungsmedium von einem zugehörigen Mediumanschluss (118a, 118b, 118c, 118d, 118e) zu dem Mediumeinlass (106) und damit in die Behandlungskammer (104) zu fördern. Die Fördervorrichtung (110) beinhaltet eine Sammelleitung (120) sowie eine zwischen Sammelleitung (120) und Mediumeinlass (106) angeordnete Förderpumpe (122), wobei ein jeder Mediumanschluss (118a, 118b, 118c, 118d, 118e) ein zugeordnetes, direkt an der Sammelleitung (120) angeschlossenes Absperrorgan (124a, 124b, 124c, 124d, 124e) aufweist.

## Beschreibung

### Technisches Gebiet

Die Erfindung betrifft eine Vorrichtung zur Behandlung einer Messsonde gemäss dem Oberbegriff des Anspruches 1 sowie Verwendungen der Vorrichtung gemäss den Oberbegriffen der Ansprüche 13 und 14. Insbesondere betrifft sie eine Vorrichtung zur Reinigung und/oder Kalibrierung einer Messsonde.

### Stand der Technik

Ein bekanntes Problem bei der Verwendung von elektrochemischen Messsonden, beispielsweise von pH-Elektroden, besteht darin, dass eine jede Messsonde nach einer gewissen Betriebsdauer gereinigt und gelegentlich auch wieder kalibriert werden muss. Die erforderlichen Reinigungs- und Kalibrierverfahren sind an sich bekannt und beruhen darauf, dass der massgebliche Teil der äusseren Sondenoberfläche in einer vorgegebenen Abfolge mit einer Mehrzahl von Behandlungsmedien in Kontakt gebracht wird. Zu diesen Behandlungsmedien zählen insbesondere verschiedene Arten von Reinigungsflüssigkeiten wie Säuren oder Laugen, Spülflüssigkeiten wie Wasser oder organische Lösungsmittel, Spülgase wie Luft, Stickstoff oder allenfalls ein Edelgas, sowie verschiedene Arten von Kalibrierflüssigkeiten und -gasen. Beispielsweise wird eine pH-Elektrode bei Bedarf mit einer Reinigungsflüssigkeit gereinigt, welche anschliessend mit einer Spülflüssigkeit wie Wasser weggespült wird. Danach wird das pH-Meter in der Regel mit Hilfe von zwei oder allenfalls mehreren verschiedenen standardisierten Pufferlösungen kalibriert.

In der GB 2033583 ist eine Vorrichtung zur Reinigung einer Elektrode beschrieben, welche eine Mehrzahl von Verschiebemitteln aufweist, um die Elektrode in einen mit Reinigungsflüssigkeit gefüllten Behälter ein- und wieder auszuführen. Nachteilig an dieser Vorrichtung ist deren komplexer Aufbau; zudem wäre die Verwendung zur Reinigung und Kalibrierung sehr umständlich, da entweder verschiedene Behälter für die einzelnen zu verwendenden Flüssigkeiten oder aber eine zusätzliche Vorrichtung zum Auswechseln der im Behälter vorhandenen Flüssigkeiten erforderlich wäre.

In der EP 0106858 ist eine Wechselsonde zum Einsatz in Reaktionsgefässen für chemische und mikrobiologische Prozesse beschrieben, welche so ausgelegt ist, dass eine darin befindliche Messsonde gereinigt und kalibriert werden kann. Die bekannte Vorrichtung weist eine Behandlungskammer mit einem Einlass und einem Auslass für Behandlungsmedium auf, das durch eine nicht näher beschriebene Fördervorrichtung zuführbar ist. Als Behandlungsmedium ist insbesondere eine Eichflüssigkeit beziehungsweise ein Eichgas erwähnt.

Zur Vermeidung eines Durchmischens der verschiedenen Behandlungsmedien, die zwecks Reinigung und/oder Kalibrierung der Messsonde in die Behandlungskammer zuzuführen sind, weisen die bekannten Fördervorrichtungen einen eigenständigen Förderbereich für jedes einzelne Behandlungsmedium auf. Ein einzelner Förderbereich beinhaltet dabei eine zwischen Mediumvorrat und Mediumeinlass angeordnete Förderpumpe oder eine auf dem Venturiprinzip beruhende Fördereinheit.

### Darstellung der Erfindung

Aufgabe der Erfindung ist es, eine verbesserte Vorrichtung anzugeben, welche sich insbesondere durch einen einfacheren und damit kostengünstigeren Aufbau sowie durch eine grössere Anpassbarkeit an verschiedene Anwendungen auszeichnet. Eine weitere Aufgabe der Erfindung ist es, Verwendungen der Vorrichtung anzugeben.

Gelöst werden diese Aufgaben durch die im Anspruch 1 definierte Vorrichtung sowie durch die in den Ansprüchen 13 und 14 definierten Verwendungen.

Bei der erfindungsgemässen Vorrichtung beinhaltet die Fördervorrichtung eine Sammelleitung sowie eine zwischen Sammelleitung und Mediumeinlass angeordnete Förderpumpe, wobei ein jeder Mediumanschluss ein zugeordnetes, direkt an der Sammelleitung angeschlossenes Absperrorgan aufweist. Somit wird die wahlweise Zufuhr eines jeden Behandlungsmediums auf einfache Weise bewerkstelligt, indem das zugehörige Absperrorgan geöffnet wird, wobei die Absperrorgane für alle anderen Behandlungsmedien geschlossen bleiben. Dadurch, dass die einzelnen Absperrorgane direkt, das heisst im wesentlichen ohne Totvolumen an der Sammelleitung angeordnet sind, lässt sich der gesamte Förderweg zwischen dem jeweils ausgewählten Mediumvorrat bis hin zur Behandlungskammer mit dem zugeführten Behandlungsmedium durchströmen, um verbleibende Mengen anderer Behandlungsmedien zu entfernen. Da hierfür eine einzige gemeinsame Förderpumpe einsetzbar ist, ergibt sich eine einfache und kostengünstige Anordnung. Gegenüber einer auf dem Venturiprinzip beruhenden Fördervorrichtung ergibt sich zudem der Vorteil, dass auf effiziente Art und Weise beispielsweise eine hoch konzentrierte Reinigungslösung in die Behandlungskammer förderbar ist.

Bei den erfindungsgemässen Verwendungen führt man nach der Reinigung beziehungsweise vor der Kalibrierung eine Spülung durch, indem man die Fördervorrichtung und die Behandlungskammer durch abwechselndes Fördern von Spülgas und von Spülflüssigkeit ausbläst.

Vorteilhafte Ausgestaltungen der Vorrichtung sind in den abhängigen Ansprüchen beschrieben.

Bei der bevorzugten Ausgestaltung nach Anspruch 2 umfasst die Mehrzahl von Behandlungsmedien zumindest ein Spülgas, eine Spülflüssigkeit sowie eine Reinigungsflüssigkeit. Die zugehörigen Mediumanschlüsse sind an der Sammelleitung in einer Reihenfolge angeschlossen, welche am von der Förderpumpe abgewandten Ende der Sammelleitung mit dem Mediumanschluss des Spülgases beginnt, und als nächster folgt der Mediumanschluss der Spülflüssigkeit. Damit lassen sich in der Fördervorrichtung vorhandene Restmengen eines zuvor eingesetzten Behandlungsmediums auf einfache und effiziente Art entfernen, indem die Fördervorrichtung abwechselnd mit Spülgas und mit Spülflüssigkeit betrieben wird. Gemäss Anspruch 3 umfasst die Mehrzahl von Behandlungsmedien zusätzlich mindestens eine Kalibrierflüssigkeit, wobei vorzugsweise zwei oder sogar mehrere Kalibrierflüssigkeiten vorgesehen sind, um in an sich bekannter Weise eine Zweipunkt- oder Mehrpunktkalibrierung einer in der Behandlungskammer befindlichen Messsonde vorzunehmen.

Bei der Ausgestaltung nach Anspruch 4 ist die Förderpumpe in eine Leerlaufstellung bringbar, in welcher ein Mediumfluss von der Sammelleitung zum Mediumeinlass freigegeben ist. Damit lässt sich insbesondere die Zufuhr eines unter erhöhtem Druck stehenden Behandlungsmediums wie beispielsweise Pressluft oder Leitungswasser auf einfache Weise bewerkstelligen.

Grundsätzlich sind verschiedene Arten von Pumpen als Förderpumpen geeignet. Vorteilhafterweise ist die Förderpumpe gemäss Anspruch 5 als Hubkolbenpumpe ausgestaltet.

Ein Behandlungsmedium, welches - insbesondere infolge der Zufuhr weiteren Behandlungsmediums - durch den Mediumauslass aus der Behandlungskammer austritt, kann beispielsweise in einen Auffangbehälter geführt sein. Bei der Ausgestaltung nach Anspruch 6 ist der Mediumauslass mit mindestens einem Mediumanschluss verbindbar. Dadurch lässt sich eine Rückführung von Behandlungsmedium zum betreffenden Mediumanschluss und weiter in den Mediumvorrat vornehmen, was insbesondere bei toxischen und/oder aggressiven Reinigungsflüssigkeiten mit ökologischen Vorteilen einhergeht und zudem auch eine Kosteneinsparung erlaubt.

Grundsätzlich kann die Betätigung der Absperrorgane und die Steuerung der Förderpumpe manuell erfolgen. Gemäss Anspruch 7 ist hierfür einer Steuerungsvorrichtung vorgesehen, was insbesondere eine Standardisierung des Reinigungs- und/oder Kalibrierverfahrens erlaubt. Besonders vorteilhaft ist die im Anspruch 8 definierte Ausgestaltung, bei der die Steuerungsvorrichtung eine Messvorrichtung zur Erfassung mindestens eines Betriebszustandsparameters einer in der Behandlungskammer befindlichen Messsonde aufweist. Damit lässt sich beispielsweise eine Automatisierung des Sondenbetriebs dahingehend erreichen, dass der besagte Betriebszustandsparameter auf Einhaltung eines Sollwertbereichs überwacht wird und bei Verlassen des Sollwertbereichs ein Reinigungs- und/oder Kalibriervorgang eingeleitet wird.

Prinzipiell kann die Behandlungskammer eigenständig ausgestaltet sein. Vorteilhafterweise weist jedoch die Behandlungskammer wie in Anspruch 9 definiert einen Anschlussteil zur Bildung einer mediumdichten Verbindung mit einem zugeordneten Gegenstück eines Messgutbehälters auf. Gemäss Anspruch 10 ist eine mediumdichte Verschlussvorrichtung vorgesehen, mittels welcher der Innenraum der Behandlungskammer gegenüber einem an die Vorrichtung angeschlossenen Messgutbehälter verschliessbar ist, insbesondere um während eines Reinigungs- und/oder Kalibriervo r-ganges den Messgutbehälter von der Behandlungskammer zu isolieren. Die Vorrichtung nach Anspruch 11 weist eine Verschiebevorrichtung auf, mittels welcher eine Messsonde von der Behandlungskammer in einen an die Vorrichtung angeschlossenen Messgutbehälter einfahrbar und aus diesem ausfahrbar ist. Gemäss Anspruch 12 ist zudem ein Durchflusssensor für Behandlungsmedium vorgesehen, mittels welchem der Betrieb der Vorrichtung, insbesondere die wunschgemässe Zufuhr von Behandlungsmedium während eines Spül-, Reinigungs- oder Kalibriervorganges, überwacht werden kann.

### Kurze Beschreibung der Zeichnungen

Ausführungsbeispiele der Erfindung werden nachfolgend anhand der Zeichnungen näher beschrieben, dabei zeigen:
- Figur 1: eine Vorrichtung zur Reinigung und Kalibrierung einer Messsonde, in teilweise schematischer Darstellung;
- Figur 2: eine weitere Vorrichtung zur Reinigung und Kalibrierung einer Messsonde, in teilweise schematischer Darstellung.

### Wege zur Ausführung der Erfindung

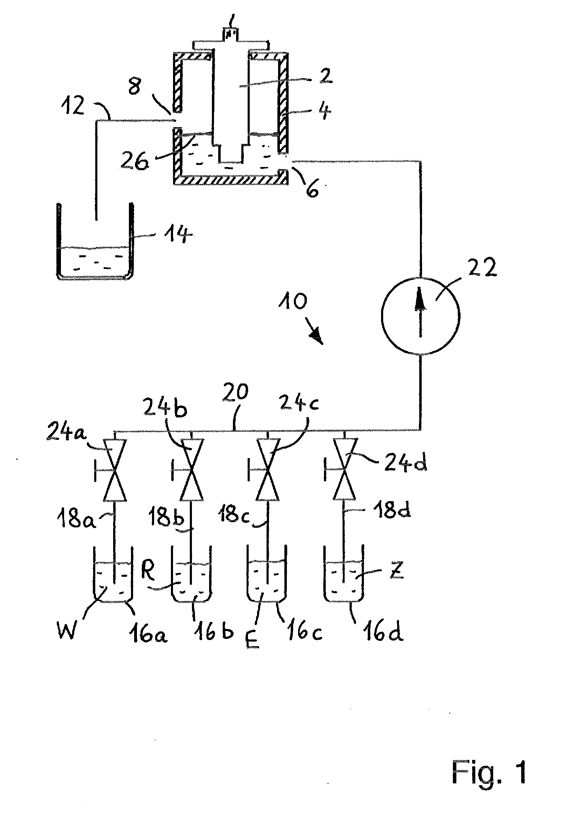

Die in der Figur 1 dargestellte Vorrichtung zur Reinigung und Kalibrierung einer Messsonde 2 weist eine Behandlungskammer 4 auf, die mit einem Mediumeinlass 6 und einem Mediumauslass 8 versehen ist. Eine Fördervorrichtung 10 ist vorgesehen, um ein Behandlungsmedium von einem zugehörigen Mediumvorrat zu dem Mediumeinlass 6 und damit in die Behandlungskammer 4 zu fördern. Im gezeigten Beispiel ist der Mediumauslass 8 höher als der Mediumeinlass 6 angeordnet und an eine Austrittsleitung 12 angeschlossen, welche in einen Auffangbehälter 14 geführt ist.

Das Behandlungsmedium ist aus einer Mehrzahl von Behandlungsmedien wie beispielsweise Wasser W, eine Reinigungsflüssigkeit R, eine erste Kalibrierflüssigkeit E oder eine zweite Kalibrierflüssigkeit Z auswählbar, die sich in zugehörigen Mediumvorräten 16a, 16b, 16c bzw. 16d befinden, welche mit entsprechenden Mediumanschlüssen 18a, 18b, 18c und 18d der Fördervorrichtung 10 verbunden sind. Die Fördervorrichtung 10 beinhaltet eine Sammelleitung 20 sowie eine zwischen Sammelleitung 20 und Mediumeinlass 6 angeordnete Förderpumpe 22. Ein jeder Mediumanschluss 18a, 18b, 18c bzw. 18d ist mit einem zugeordneten, an der Sammelleitung 20 angeschlossenen Absperrorgan 24a, 24b, 24c bzw. 24d ausgestattet. Die Absperrorgane sind dabei so angeordnet, dass der Abstand zur Sammelleitung 20 möglichst gering ist und beispielsweise das Zwei- bis Dreifache eines Innendurchmessers der Sammelleitung beträgt. Diese als "direkt" bezeichnete Anordnung bezweckt, dass zwischen dem Verschlusselement eines jeden Absperrorgans und der Sammelleitung ein möglichst geringes Totvolumen vorliegt.

Um beispielsweise eine Reinigung der Messsonde 2 durchzuführen, wird diese in die Behandlungskammer 4 eingeführt, wobei zunächst sämtliche Absperrorgane 24a bis 24d geschlossen sind und die Förderpumpe 22 ausgeschaltet ist. Anschliessend wird die Förderpumpe 22 eingeschaltet und das am Mediumvorrat 16b der Reinigungsflüssigkeit R befindliche Absperrorgan 24b geöffnet. In der Folge wird Reinigungsflüssigkeit R durch den Mediumeinlass 6 in die Behandlungskammer 4 gefördert. Wenn der Pegel 26 der Reinigungsflüssigkeit R in der Behandlungskammer 4 die Höhe des Mediumauslasses 8 erreicht, fliesst Reinigungsflüssigkeit R durch die Austrittsleitung 12 in den Auffangbehälter 14. Gewünschtenfalls wird die Zufuhr der Reinigungsflüssigkeit R für eine gewisse Zeitdauer unterbrochen, um eine gewisse Einwirkungszeit an der Messsonde 2 zu erreichen. Die Zufuhr eines anderen Behandlungsmediums erfolgt analog, indem das zugehörige Absperrorgan geöffnet wird, während alle anderen Absperrorgane geschlossen bleiben. Dabei wird zunächst die in der Fördervorrichtung verbliebene Reinigungsflüssigkeit R durch das neu zugeführte Behandlungsmedium verdrängt. Insbesondere kann dies durch Fördern von Wasser und/oder Luft erreicht werden, so dass anschliessend beispielsweise Kalibrierflüssigkeit zugeführt werden kann, ohne dass diese durch verbleibende Reinigungsflüssigkeit kontaminiert wird.

Im Unterschied zu der in der Figur 1 dargestellten Anordnung kann der Mediumauslass 8 tiefer als der Mediumeinlass 6 angeordnet sein, wenn beispielsweise die Reinigung der Messsonde im Vordergrund steht. In dieser alternativen Ausgestaltung findet der Kontakt zwischen Messsonde und Behandlungsmedium nicht auf statische Weise, d.h. durch Eintauchen, sondern im ständigen Vorbeifluss von Behandlungsmedium statt.

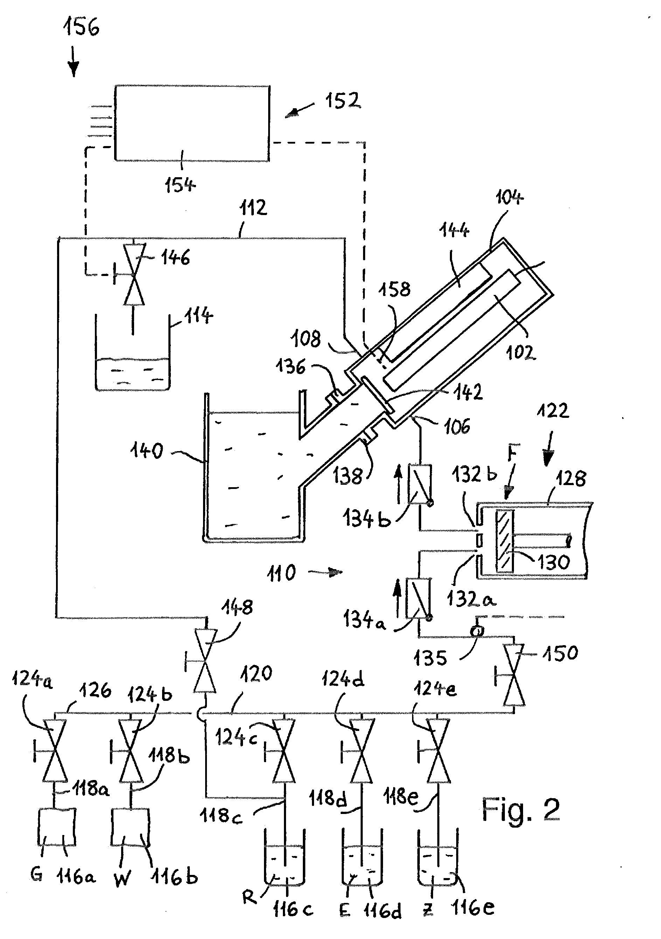

Die in der Figur 2 dargestellte Vorrichtung zur Reinigung und Kalibrierung einer Messsonde 102 weist eine Behandlungskammer 104 auf, die mit einem Mediumeinlass 106 und einem Mediumauslass 108 versehen ist. Eine Fördervorrichtung 110 ist vorgesehen, um ein Behandlungsmedium von einem zugehörigen Mediumvorrat zu dem Mediumeinlass 106 und damit in die Behandlungskammer 104 zu fördern. Der Mediumauslass 108 ist an eine Austrittsleitung 112 angeschlossen, welche in einen Auffangbehälter 114 geführt ist.

Das Behandlungsmedium ist aus einer Mehrzahl von Behandlungsmedien auswählbar, welche ein Spülgas G wie Luft oder Stickstoff, eine Spülflüssigkeit wie insbesondere Wasser W, eine Reinigungsflüssigkeit R wie beispieslweise eine Säure oder eine Lauge sowie eine erste Kalibrierflüssigkeit E und eine zweite Kalibrierflüssigkeit Z umfasst. Beispielsweise werden zur Kalibrierung einer pH-Elektrode zwei Pufferlösungen mit bekannten unterschiedlichen pH-Werten verwendet. Je nach Anwendung können aber auch mehr als zwei Kalibrierflüssigkeiten vorgesehen werden. Die besagten Behandlungsmedien befinden sich in - schematisch dargestellten - zugehörigen Mediumvorräten 116a, 116b, 116c, 116d und 116e, wobei die flüssigen Behandlungsmedien vorzugsweise in Flüssigkeitsbehältern enthalten sind, während das Spülgas beispielsweise in einer Druckflasche enthalten ist. Insbesondere für Wasser und Luft kann es zweckmässig sein, die entsprechenden Mediumanschlüsse an eine zugehörige Versorgungsleitung anzuschliessen.

Die Fördervorrichtung 110 beinhaltet eine Sammelleitung 120 sowie eine zwischen Sammelleitung 120 und Mediumeinlass 106 angeordnete Förderpumpe 122. Ein jeder Mediumanschluss 118a, 118b, 118c, 118d bzw. 118e ist mit einem zugeordneten, an der Sammelleitung 120 angeschlossenen Absperrorgan 124a, 124b, 124c, 124d bzw. 124e ausgestattet. Wie bereits bei der Ausgestaltung gemäss der Figur 1 sind die Absperrorgane so angeordnet, dass der Abstand zur Sammelleitung 120 möglichst gering ist und beispielsweise das Zwei- bis Dreifache eines Innendurchmessers der Sammelleitung beträgt. Durch diese direkte Anordnung liegt zwischen dem Verschlusselement eines jeden Absperrorgans und der Sammelleitung 120 ein nur geri n-ges Totvolumen vor.

Ausgehend von dem von der Förderpumpe 122 abgewandten Ende 126 der Sammelleitung 120 sind die Mediumanschlüsse in einer Reihenfolge angeordnet, die mit dem Mediumanschluss 118a des Spülgases G beginnt. Anschliessend folgt der Mediumanschluss 118b der Spülflüssigkeit W und danach die weiteren Mediumanschlüsse 118c, 118d und 118e der Reinigungsflüssigkeit R sowie für die Kalibrierflüssigkeiten E und Z. Dank dieser Anordnung lassen sich in der Fördervorrichtung 110 vorhandene Restmengen eines Behandlungsmediums auf einfache und effiziente Art entfernen, indem abwechselnd Spülgas und Spülflüssigkeit durch die Fördervorrichtung befördert wird. Vorteilhafterweise wird dabei zunächst Spülgas, danach Spülflüssigkeit und schliesslich nochmals Spülgas befördert, bei Bedarf können diese Vorgänge wiederholt werden.

Um die Zufuhr eines unter erhöhtem Druck stehenden Behandlungsmediums wie beispielsweise Pressluft oder Leitungswasser auf einfache Weise zu bewerkstelligen, ist die Förderpumpe 122 in eine Leerlaufstellung bringbar, in welcher ein Mediumfluss von der Sammelleitung 120 zum Mediumeinlass 106 freigegeben ist. Im gezeigten Beispiel ist die Förderpumpe 122 als Hubkolbenpumpe ausgestaltet, bei welcher ein in einem Zylindergehäuse 128 befindlicher Kolben 130 in einer Freigabestellung F anhaltbar ist, welche einen freien Durchfluss vom Pumpeneingang 132a zum Pumpenausgang 132b zulässt. Je ein Rückflussverhinderer 134a und 134b sind dazu vorgesehen, den Mediumfluss nur in der gewünschten Richtung von der Sammelleitung 120 zum Mediumeinlass 106 zuzulassen. Ausserdem ist zwischen der Sammelleitung 120 und der Förderpumpe 122 ein Durchflusssensor 135, beispielsweise ein kapazitiver Durchflusssensor, angeordnet, um die Zufuhr von Behandlungsmedium zu erfassen und die Funktion der gesamten Vorrichtung mit zu überwachen.

Die Behandlungskammer 104 weist einen Anschlussteil 136 zur Bildung einer mediumdichten Verbindung mit einem zugeordneten Gegenstück 138 eines Messgutbehälters 140 auf. Ausserdem ist die Behandlungskammer 104 mit einer nicht näher dargestellten mediumdichten Verschlussvorrichtung 142 ausgestattet, mittels welcher der Innenraum der Behandlungskammer 104 gegenüber dem Messgutbehälter 140 verschliessbar ist. Eine ebenfalls nicht näher dargestellte Verschiebevorrichtung 144 ist dazu vorgesehen, die Messsonde 102 von der Behandlungskammer 104 in den Messgutbehälter 140 ein- bzw. auszufahren. Vorteilhafte Ausgestaltungen der Behandlungskammer 104 sind beispielsweise den Druckschriften CH 673783, CH 673895 und EP 0882896 entnehmbar.

Wie aus der Figur 2 hervorgeht, ist der Mediumauslass 108 über die Austrittsleitung 112 mit dem Mediumanschluss 118c für Reinigungsflüssigkeit R verbindbar. Um das aus der Behandlungskammer 104 austretende Behandlungsmedium wahlweise in den Auffangbehälter 114 oder - im Falle der Reinigungsflüssigkeit - zurück in den zugehörigen Mediumvorrat 116c zu führen, ist je ein Absperrorgan 146 bzw. 148 zwischen dem Mediumauslass 108 einerseits und dem Auffangbehälter 114 bzw. dem Mediumanschluss 118c für Reinigungsflüssigkeit R andererseits angeordnet. Ein weiteres Absperrorgan 150 befindet sich zwischen der Sammelleitung 120 und der Förderpumpe 122.

Eine in der Figur 2 schematisch dargestellte Steuerungsvorrichtung 152 weist eine Steuereinheit 154 auf, welche über nicht näher dargestellte Verbindungsleitungen 156 mit den Absperrorganen 124a bis 124e sowie 146, 148 und 150 und mit der Förderpumpe 122 verbunden ist. Ausserdem beinhaltet die Steuerungsvorrichtung 152 eine Messvorrichtung 158 zur Erfassung mindestens eines Betriebszustandsparameters der Messsonde 102.

Die in der Figur 2 dargestellte Vorrichtung ist für eine automatisierte Betriebsart verwendbar. Beispielsweise wird der anhand der Messvorrichtung 158 erfasste Betriebszustandsparameter auf Einhaltung eines Sollwertbereichs überwacht und bei Verlassen des Sollwertbereichs ein Reinigungs- und/oder ein Kalibriervorgang eingeleitet. Dabei wird zunächst der laufende Messprozess unterbrochen, danach die Messsonde 102 aus dem Messgutbehälter 140 in die Behandlungskammer 104 zurückgefahren und schliesslich mittels der Verschlussvorrichtung 142 die Behandlungskammer 104 gegenüber dem Messgutbehälter 140 verschlossen. Anschliessend wird -wie nachfolgend näher beschrieben - ein Reinigungs- oder ein Kalibriervorgang, beziehungsweise ein Reinigungsvorgang mit nachfolgendem Kalibriervorgang vorgenommen.

Beim Reinigungsvorgang fördert man mittels der Fördervorrichtung 110 Reinigungsflüssigkeit R zu dem Mediumeinlass 106 und damit in die Behandlungskammer 104. Um die gewünschte Reinigungswirkung zu erzielen, ist für eine ausreichende Einwirkungszeit der Reinigungsflüssigkeit an der Messsonde 102 zu sorgen, indem entweder während einer gewissen Zeitdauer die Reinigungsflüssigkeit durch die Behandlungskammer hindurch befördert wird oder aber die Reinigungsflüssigkeit während einer gewissen Zeitdauer bei ausgeschalteter Fördervorrichtung in der Behandlungskammer belassen wird. Anschliessend führt man eine Spülung durch, indem man - wie bereits weiter oben beschrieben - die Fördervorrichtung 110 und die Behandlungskammer 104 durch abwechselndes Fördern von Spülgas G und von Spülflüssigkeit W ausbläst. Während des Förderns von Spülgas - allenfalls auch von Spülflüssigkeit - ist die Förderpumpe in Leerlaufstellung zu bringen.

Beim Kalibriervorgang führt man zunächst eine Spülung auf die gerade beschriebene Art durch. Danach fördert man mittels der Fördervorrichtung 110 eine Kalibrierflüssigkeit E bzw. Z zum Mediumeinlass 106 und damit in die Behandlungskammer 104. In der Folge wird in an sich bekannter Weise eine Kalibrierung der Messsonde bzw. des damit verbundenen Messgerätes vorgenommen. Für die übliche Mehrpunktkalibrierung wird der beschriebene Kalibriervorgang nacheinander mit mehreren unterschiedlichen Kalibrierflüssigkeiten, beispielsweise mit der ersten und zweiten Kalibrierflüssigkeit E bzw. Z durchgeführt. Erforderlichenfalls wird nach dem Kalibriervorgang eine weitere Spülung vorgenommen.

### Bezugszeichenliste

- 2: Messsonde
- 4: Behandlungskammer
- 6: Mediumeinlass
- 8: Mediumauslass
- 10: Fördervorrichtung
- 12: Austrittsleitung
- 14: Auffangbehälter
- 16a, 16b, 16c, 16d: Mediumvorrat
- 18a, 18b, 18c, 18d: Mediumanschluss
- 20: Sammelleitung
- 22: Förderpumpe
- 24a, 24b, 24c, 24d: Absperrorgan
- 26: Flüssigkeitspegel
- 102: Messsonde
- 104: Behandlungskammer
- 106: Mediumeinlass
- 108: Mediumauslass
- 110: Fördervorrichtung
- 112: Austrittsleitung
- 114: Auffangbehälter
- 116a, 116b, 116c, 116d, 116e: Mediumvorrat
- 118a, 118b, 118c, 118d, 118e: Mediumanschluss
- 120: Sammelleitung
- 122: Förderpumpe
- 124a, 124b, 124c, 124d, 124e: Absperrorgan
- 126: Ende von 120
- 128: Zylindergehäuse von 122
- 130: Kolben
- 132a, 132b: Pumpeneingang, Pumpenausgang
- 134a, 134b: Rückflussverhinderer
- 135: Durchflusssensor
- 136: Anschlussteil
- 138: Gegenstück
- 140: Messgutbehälter
- 142: Verschlussvorrichtung
- 144: Verschiebevorrichtung
- 146: Absperrorgan
- 148: Absperrorgan
- 150: Absperrorgan
- 152: Steuerungsvorrichtung
- 154: Steuereinheit
- 156: Verbindungsleitungen
- 158: Messvorrichtung
- G: Spülgas
- W: Wasser
- R: Reinigungsflüssigkeit
- E: erste Kalibrierflüssigkeit
- Z: zweite Kalibrierflüssigkeit
- F: Freigabestellung

## Patentansprüche

1. Vorrichtung zur Behandlung einer Messsonde, mit einer Behandlungskammer (4; 104), die einen Mediumeinlass (6; 106) und einen Mediumauslass (8; 108) aufweist, sowie mit einer Fördervorrichtung (10, 110), mittels welcher wahlweise ein aus einer Mehrzahl von Behandlungsmedien (G, W, R, E, Z) ausgewähltes Behandlungsmedium von einem zugehörigen Mediumanschluss (18a, 18b, 18c, 18d; 118a, 118b, 118c, 118d, 118e) zu dem Mediumeinlass (6; 106) und damit in die Behandlungskammer (4; 104) förderbar ist, **dadurch gekennzeichnet, dass** die Fördervorrichtung (10; 110) eine Sammelleitung (20; 120) sowie eine zwischen Sammelleitung (20; 120) und Mediumeinlass (6; 106) angeordnete Förderpumpe (22; 122) beinhaltet, wobei ein jeder Mediumanschluss (18a, 18b, 18c, 18d; 118a, 118b, 118c, 118d, 118e) ein zugeordnetes, direkt an der Sammelleitung (20; 120) angeschlossenes Absperrorgan (24a, 24b, 24c, 24d; 124a, 124b, 124c, 124d, 124e) aufweist.

2. Vorrichtung nach Anspruch 1, **dadurch gekennzeichnet, dass** die Mehrzahl von Behandlungsmedien zumindest ein Spülgas (G), eine Spülflüssigkeit (W) und eine Reinigungsflüssigkeit (R) umfasst, wobei die zugehörigen Mediumanschlüsse (118a, 118b, 118c) an der Sammelleitung (120) in einer Reihenfolge angeschlossen sind, welche am von der Förderpumpe (122) abgewandten Ende (126) der Sammelleitung (120) mit dem Mediumanschluss (118a) des Spülgases (G) beginnt, gefolgt vom Mediumanschluss (118b) der Spülflüssigkeit (W).

3. Vorrichtung nach Anspruch 1 oder 2, **dadurch gekennzeichnet, dass** die Mehrzahl von Behandlungsmedien zusätzlich mindestens eine Kalibrierflüssigkeit (E, Z) umfasst.

4. Vorrichtung nach einem der Ansprüche 1 bis 3, **dadurch gekennzeichnet, dass** die Förderpumpe (122) in eine Leerlaufstellung (F) bringbar ist, in welcher ein Mediumfluss von der Sammelleitung (120) zum Mediumeinlass (106) freigegeben ist.

5. Vorrichtung nach einem der Anprüche 1 bis 4, **dadurch gekennzeichnet, dass** die Förderpumpe als Hubkolbenpumpe (122) ausgestaltet ist.

6. Vorrichtung nach einem der Ansprüche 1 bis 5, **dadurch gekennzeichnet, dass** der Mediumauslass (108) mit mindestens einem Mediumanschluss (118c) verbindbar ist.

7. Vorrichtung nach einem der Ansprüche 1 bis 6, **dadurch gekennzeichnet, dass** sie mit einer Steuerungsvorrichtung (152) zur Betätigung der Absperrorgane (124a, 124b, 124c, 124d, 124e) und zur Steuerung der Förderpumpe (122) ausgestattet ist.

8. Vorrichtung nach Anspruch 7, **dadurch gekennzeichnet, dass** die Steuerungsvorrichtung (152) eine Messvorrichtung (158) zur Erfassung mindestens eines Betriebszustandsparameters einer in der Behandlungskammer (104) befindlichen Messsonde (102) aufweist.

9. Vorrichtung nach einem der Ansprüche 1 bis 8, **dadurch gekennzeichnet, dass** die Behandlungskammer (104) einen Anschlussteil (136) zur Bildung einer mediumdichten Verbindung mit einem zugeordneten Gegenstück (138) eines Messgutbehälters (140) aufweist.

10. Vorrichtung nach Anspruch 9, **dadurch gekennzeichnet, dass** sie eine Verschlussvorrichtung (142) aufweist, mittels welcher der Innenraum der Behandlungskammer (104) gegenüber einem an die Vorrichtung angeschlossenen Messgutbehälter (140) mediumdicht verschliessbar ist.

11. Vorrichtung nach Anspruch 9 oder 10, **dadurch gekennzeichnet, dass** sie eine Verschiebevorrichtung (144) aufweist, mittels welcher eine Messsonde (102) von der Behandlungskammer (104) in einen an die Vorrichtung angeschlossenen Messgutbehälter (140) einfahrbar und aus diesem ausfahrbar ist.

12. Vorrichtung nach einem der Ansprüche 1 bis 10, **dadurch gekennzeichnet, dass** sie mit einem Durchflusssensor (135) für Behandlungsmedium ausgestattet ist.

13. Verwendung der Vorrichtung nach Anspruch 2 zur Reinigung einer in der Behandlungskammer (104) befindlichen Messsonde, wobei man mittels der Fördervorrichtung (110) eine Reinigungsflüssigkeit (R) zu dem Mediumeinlass (106) und damit in die Behandlungskammer (104) fördert, **dadurch gekennzeichnet, dass** man anschliessend eine Spülung durchführt, indem man die Fördervorrichtung (110) und die Behandlungskammer (104) durch abwechselndes Fördern von Spülgas (G) und von Spülflüssigkeit (W) ausbläst.

14. Verwendung der Vorrichtung nach Anspruch 3 zur Kalibrierung einer in der Behandlungskammer (104) befindlichen Messsonde, wobei man mittels der Fördervorrichtung (110) eine Kalibrierflüssigkeit (E, Z) zu dem Mediumeinlass (106) und damit in die Behandlungskammer (104) fördert, **dadurch gekennzeichnet, dass** man vorgängig eine Spülung durchführt, indem man die Fördervorrichtung (110) und die Behandlungskammer (104) durch abwechselndes Fördern von Spülgas (G) und von Spülflüssigkeit (W) ausbläst.
